# EUROPÄISCHE PATENTSCHRIFT

(11) **EP 1 733 297 B1**
(45) Veröffentlichungstag und Bekanntmachung des Hinweises auf die Patenterteilung: **21.11.2007**
(21) Anmeldenummer: 05751642.9
(22) Anmeldetag: 21.03.2005
(51) Int. Cl.: G06F 1/32

(54) **VERFAHREN UND VORRICHTUNG ZUM NETZWERKMANAGEMENT PHYSIKALISCH GETRENNTER NETZWERKE**
METHOD AND DEVICE FOR THE NETWORK MANAGEMENT OF PHYSICALLY SEPARATE NETWORKS
PROCEDE ET DISPOSITIF DE GESTION DE RESEAUX DE RESEAUX PHYSIQUEMENT SEPARES

(30) Priorität: 30.03.2004 DE 102004016325
(43) Veröffentlichungstag der Anmeldung: 20.12.2006
(73) Patentinhaber: Volkswagen Aktiengesellschaft, 38436 Wolfsburg (DE)
(72) Erfinder: VALENTINI, Horst-Dieter, 38547 Calberlah (DE); MÜCKE, Maurice, 38440 Wolfsburg (DE); HOFFMANN, Christoph, 38446 Wolfsburg (DE)
(74) Vertreter: Patentanwälte Bressel und Partner
(86) Internationale Anmeldenummer: PCT/EP2005/003201
(87) Internationale Veröffentlichungsnummer: WO 2005/096124

(56) Entgegenhaltungen:
- EP-A- 0 798 626
- EP-A- 0 940 950
- EP-B- 0 412 085
- DE-A1- 4 226 704
- DE-A1- 10 225 578
- US-A1- 2001 042 137
- US-B1- 6 549 972

## Beschreibung

Die Erfindung betrifft ein Verfahren und eine Vorrichtung zum netzübergreifenden Management eines Kommunikationssystems, umfassend mindestens zwei physikalisch getrennte Netzwerke mit jeweils mindestens einem elektronischen Steuergerät.

Elektronische Steuergeräte werden unter anderem in Fahrzeugen, Flugzeugen und Automaten eingesetzt. Die Steuergeräte sind über Busleitungen beispielsweise einen CAN-Bus oder einen FlexRay-Bus für einen Austausch von Daten verbunden. Steuergeräte eines Bussystems werden eventuell von unterschiedlichen Quellen mit Energie versorgt. Die Kommunikation der Steuergeräte erfolgt vorzugsweise mittels mehrerer physikalisch getrennter Netzwerke, wobei jedem Netzwerk mindestens ein Steuergerät zugeordnet ist.

Für eine Verringerung des Energiebedarfs ist es bekannt, Steuergeräte, welche zeitweise nicht für Funktionen und/oder Anwendungen benötigt oder gewünscht sind, in einen "Sleep"-Zustand oder Busruhe-Zustand zu versetzen. Steuergeräte im Busruhe-Zustand sind von der Kommunikation über das Bussystem auszuschließen.

Dabei ist es bekannt, Netzwerke derart auszubilden, dass jedes dem Netzwerk zugeordnete Steuergerät einen Zustandswechsel des Netzwerks von Busruhe zu Busaktivität bewirken kann. Eine (Re-)Aktivierung eines Steuergeräts erfolgt durch einen Nutzer, beispielsweise durch Tastendruck, und/oder bei Bedarf durch ein verbundenes aktives Steuergerät. Befindet sich das zu aktivierende Steuergerät in einem physikalisch getrennten Netzwerk, so wird für eine Aktivierung ein separates Signal gesendet.

Aus der US-B1-6 549 972 ist ein Kommunikationssystem bekannt, umfassend zwei durch ein Gateway physikalisch getrennte Netzwerke mit jeweils mindestens einem Steuergerät, wobei ein Hochlauf eines Netzwerkes und/oder ein Aufrechterhalten einer Busaktivität des Netzwerks durch einen Empfang eines Signals durch mindestens ein Steuergerät des Netzwerks ausgelöst wird.

Der Erfindung liegt das technische Problem zugrunde, ein Verfahren und eine Vorrichtung zu schaffen, durch welche ein netzwerkübergreifendes Management für physikalisch getrennte Netzwerke vereinfacht wird.

Die Lösung des Problems ergibt sich durch die Gegenstände mit den Merkmalen der Patentansprüche 1 und 7. Weitere vorteilhafte Ausgestaltungen der Erfindung ergeben sich aus den Unteransprüchen.

Hierfür wird in einem Kommunikationssystem, umfassend mindestens zwei physikalisch getrennte Netzwerke mit jeweils mindestens einem Steuergerät, ein Hochlauf eines Netzwerks und/oder ein Aufrechterhalten einer Busaktivität des Netzwerks durch einen Empfang eines Signals durch mindestens ein Steuergerät des Netzwerks ausgelöst, wobei das Signal Teil einer Netzmanagement-Botschaft ist und in der Netzmanagement-Botschaft für jedes im Fahrzeug und/oder einem anderen System vorhandene Netzwerk, das mindestens die Zustände Busruhe und Busaktivität unterscheidet, mindestens ein Signal reserviert ist. Die Netzmanagement-Botschaften werden durch die kommunizierenden Steuergeräte generiert, wobei in Steuergeräten des Bussystems mindestens Informationen über Kommunikationspartner und deren Zuordnung zu einem Netzwerk vorhanden und/oder abrufbar sind. Anhand dieser Informationen kann ein Steuergerät durch eine Netzmanagement-Botschaft die Aktivierung seiner benötigten Kommunikationspartner auf anderen Netzwerken auslösen. Verschiedene Netzwerke können auch unterschiedlichen Bussystemen, welche beispielsweise über Gateways verbundenen sind, zugeordnet sein, zum Beispiel einem CAN-Bus-System und einem MOST-Bus-System.

Dazu ist vorzugsweise in einer Sollverbauliste eine Konfiguration des Fahrzeugs und/oder eines anderen Systems individuell abgelegt, wobei eine Zuordnung eines Steuergeräts zu einem Netzwerk der Sollverbauliste entnehmbar ist. Durch die Sollverbauliste ist eine Flexibilität des Systems gegeben. Eine Veränderung der Zuordnung eines Steuergeräts zu einem bestimmten Netzwerk ist lediglich in der Sollverbauliste zu kommunizieren. Eine Veränderung und/oder Umprogrammierung verbundener Steuergeräte ist dabei nicht notwendig, da der Algorithmus zum Wecken des zu aktivierenden Netzwerkes den Wert der Sollverbauliste übernimmt.

In einer bevorzugten Ausführungsform senden aktive Steuergeräte des Kommunikationssystems zugeordnete Netzmanagement-Botschaften zyklisch wiederholt. Eine Schlafbereitschaft wird anderen Steuergeräten signalisiert. Zyklisch wiederholte Netzmanagement-Botschaften ermöglichen eine einfache Kommunikation einer Schlafbereitschaft. Durch die Reservierung bestimmter Signale der Netzmanagement-Botschaft ist eine Aktivierung eines physikalisch getrennten Netzwerks unter Verwendung vorhandener Netzmanagement-Botschaften möglich.

In einer bevorzugten Ausführungsform werden ausgefallene Steuergeräte als schlafbereit eingestuft. Dies ist vorteilhaft, da Fehleralgorithmen für eine Funktionssteuerung der Netzversorgung genutzt werden können.

In einer weiteren bevorzugten Ausführungsform wird ein Netzwerk in den Busruhe-Zustand überführt, wenn alle Steuergeräte des Netzwerks schlafbereit sind. Durch eine Funktionssteuerung des Netzwerks durch eine Erkennung der Schlafbereitschaft der Steuergeräte werden Ressourcen in den Steuergeräten gespart. Dies ist insbesondere bei dauerversorgten Steuergeräten von Vorteil.

In einer weiteren bevorzugten Ausführungsform erfolgt der Übergang in einen Busruhe-Zustand des Netzwerks nach einer Busberuhigungsphase. In der Busberuhigungsphase sind Sendefunktionen abgeschaltet und Empfangsfunktionen aktiviert. Durch die Busberuhigungsphase wird verhindert, dass noch aktive Steuergeräte bereits schlafende Steuergeräte aufwecken.

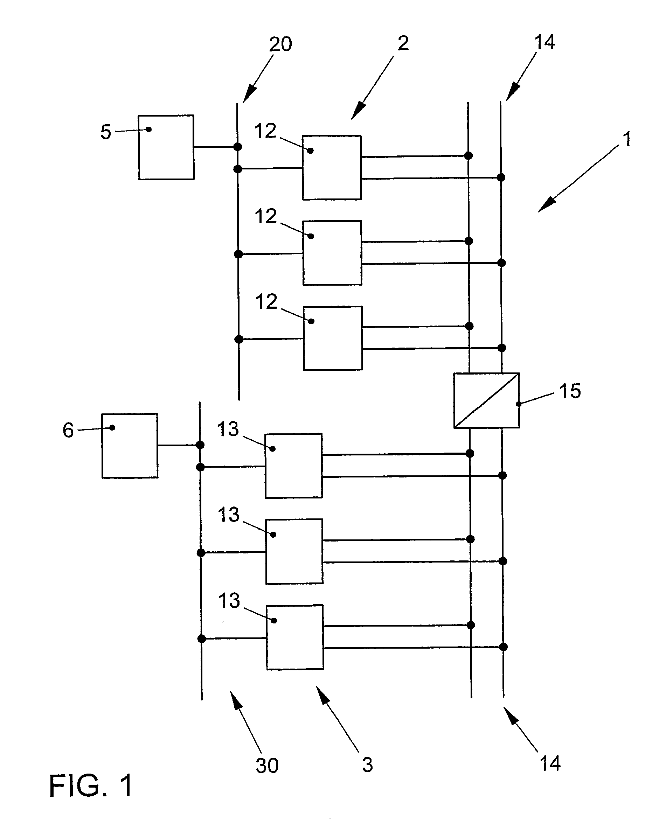

Die Erfindung wird nachfolgend anhand eines bevorzugten Ausführungsbeispiels näher erläutert. Die einzige Figur zeigt eine schematische Darstellung eines Kommunikationssystems mit dezentralem direkten Netzmanagement.

Die Figur zeigt ein Kommunikationssystem 1 umfassend Steuergeräte 12, 13 und Busleitungen 14. Das Kommunikationssystem 1 ist als CAN-Bus-System ausgebildet und beispielsweise in einem Fahrzeug angeordnet. Die Steuergeräte 12 sind einem Netzwerk 2 zugeordnet und werden dauerhaft über eine Leitung 20 von einer Netzquelle 5 gespeist. Die Steuergeräte 13 sind einem Netzwerk 3 zugeordnet und werden über eine Leitung 30 von einer Netzquelle 6 gespeist. Die Netzwerke 2, 3 sind physikalisch voneinander getrennt und über ein Gateway 15 gekoppelt. Neben der dargestellten Anordnung ist es auch denkbar, dass die Netzwerke 2, 3 von einer gemeinsamen Netzquelle gespeist werden. Außerdem ist es denkbar, dass die Netzwerke 2, 3 verschiedenen Bussystemen zugeordnet sind. So kann beispielsweise das eine Netzwerk 2 als CAN-Bus-System und das andere Netzwerk 3 als MOST-Bus-System ausgebildet sein.

Wird ein Steuergerät 12, 13 nicht länger benötigt und/oder gewünscht, so kann es zur Einsparung von Energie in einen Busruhe-Zustand oder "Sleep"-Zustand versetzt werden. Bei einem -in der Figur nicht dargestellten- nicht dauerversorgten Steuergerät ist zu diesem Zweck beispielsweise die Verbindung zur Netzquelle 5 unterbrechbar.

Jedes Steuergerät 12, 13 sendet zyklisch wiederholt eine ihm zugeordnete Netzmanagement-Botschaft über die Busleitung 14. Eine Schlafbereitschaft eines Steuergeräts 12, 13 wird den über die Busleitung 14 verbundenen Steuergeräten signalisiert. Ausgefallene Steuergeräte werden für das Netzmanagement wie schlafbereite Steuergeräte behandelt.

Sind alle dauerversorgten Steuergeräte 12, 13 eines Netzwerks 2, 3 schlafbereit, so wird das Netzwerk 2, 3 in einen "Sleep"-Zustand oder Busruhe-Zustand überführt. Die Überführung in den Busruhe-Zustand erfolgt nach einer Busberuhigungsphase, in welcher ein Senden der Steuergeräte abgeschaltet ist, ein Empfang von Signalen aber noch möglich ist.

Eine Überführung des Netzwerks in den Busruhe-Zustand ist bei einem dezentralen Netzmanagement nach Zustimmung aller Netzknoten durch jeden Netzknoten möglich.

Für jedes Netzwerk 2, 3 sind in den Netzmanagement-Botschaften Signale reserviert. Jedes Steuergerät 12, 13 besitzt Informationen über ihm zugeordnete Kommunikationspartner. Anhand einer Sollverbauliste, in der eine Konfiguration des Fahrzeugs und/oder eines anderen zugeordneten Systems abgelegt ist, erkennt ein Steuergerät 12, 13, auf welchem Netzwerk 2, 3 die für eine Kommunikation benötigten Steuergeräte verbaut sind. Unter Verwendung dieser Informationen ist eine Netzmanagement-Botschaft generierbar und/oder veränderbar. Ein aktives oder aktiviertes Steuergerät 12, 13 sendet zyklisch seine Netzmanagement-Botschaft, wobei durch entsprechende Signale in der Netzmanagement-Botschaft benötigte Kommunikationspartner auf dem entsprechenden Netzwerk 2, 3 geweckt und/oder gezielt wach gehalten werden. Ein Hochlauf des Netzwerks 2, 3 wird in jeder Phase durch den Empfang des entsprechenden Signals in einer Netzmanagement-Botschaft eines Knotens des Netzwerks 2, 3 ausgelöst. Durch ein entsprechendes Signal ist somit durch ein Steuergerät 12 des Netzwerks 2 das Netzwerk 3 aktivierbar und durch ein Steuergerät 13 ist das Netzwerk 2 aktivierbar.

Die Funktion für ein bus- und/oder netzwerkübergreifendes Wecken ist in jedem Steuergerät 12, 13 realisierbar. Veränderungen in der Konfiguration des Fahrzeugs durch umsetzen eines Steuergeräts in ein anderes Netzwerk und/oder ein anderes Bussystem sind durch die Sollverbauliste propagierbar, ohne dass hierfür andere Steuergeräte umgesetzt und/oder umprogrammiert werden müssen.

## Patentansprüche

1. Verfahren zum netzübergreifenden Management mindestens eines Kommunikationssystems, umfassend mindestens zwei physikalisch getrennte Netzwerke mit jeweils mindestens einem Steuergerät, wobei ein Hochlauf eines Netzwerks und/oder ein Aufrechterhalten einer Busaktivität des Netzwerks durch einen Empfang eines Signals durch mindestens ein Steuergerät des Netzwerks ausgelöst wird,
**dadurch gekennzeichnet, dass**
das Signal Teil einer Netzmanagement-Botschaft ist, wobei in der Netzmanagement-Botschaft für ein Netzwerk (2, 3), das mindestens die Zustände Busruhe, Busaktivität und Aufwecken eines anderen Steuergerätes unterscheidet, mindestens ein Signal reserviert wird, und
die Netzmanagement-Botschaft durch ein kommunizierendes Steuergerät (12, 13) mindestens teilweise generiert und/oder gesendet wird, wobei in Steuergeräten (12, 13) des Kommunikationssystems (1) mindestens Informationen über benötigte Kommunikationspartner und deren Zuordnung zu einem Netzwerk (2, 3) vorhanden sind und/oder abgerufen werden.

2. Verfahren nach Anspruch 1, **dadurch gekennzeichnet, dass** in einer Sollverbauliste eine Konfiguration abgelegt wird, wobei eine Zuordnung eines Steuergeräts (12, 13) zu einem Netzwerk (2, 3) der Sollverbauliste entnehmbar ist.

3. Verfahren nach Anspruch 1 oder 2, **dadurch gekennzeichnet, dass** ein aktives Steuergerät (12, 13) die Netzmanagement-Botschaft zyklisch wiederholt sendet und/oder eine Schlafbereitschaft eines Steuergerätes (12,13) durch Ausbleiben der Netzmanagement-Botschaft signalisiert wird.

4. Verfahren nach Anspruch 3, **dadurch gekennzeichnet, dass** ausgefallene Steuergeräte (12, 13) als schlafbereit eingestuft werden.

5. Verfahren nach Anspruch 3 oder 4, **dadurch gekennzeichnet, dass** ein dem Bussystem (1) zugeordnetes Netzwerk (2, 3) in einen Busruhe-Zustand überführt wird, wenn alle Steuergeräte (12, 13) des Netzwerks (2, 3) schlafbereit sind.

6. Verfahren nach Anspruch 5, **dadurch gekennzeichnet, dass** der Übergang in einen Busruhe-Zustand des Netzwerks (2, 3) nach einer Busberuhigungsphase erfolgt, wobei in der Busberuhigungsphase Sendefunktionen abgeschaltet werden und Empfangsfunktionen aktiviert bleiben.

7. Vorrichtung zum netzübergreifenden Management mindestens eines Kommunikationssystems, umfassend mindestens zwei physikalisch getrennte Netzwerke mit jeweils mindestens einem Steuergerät, wobei ein Hochlauf eines Netzwerks und/oder ein Aufrechterhalten einer Busaktivität des Netzwerks durch einen Empfang eines Signals durch mindestens ein Steuergerät des Netzwerks auslösbar ist,
**dadurch gekennzeichnet, dass**
das Signal Teil einer Netzmanagement-Botschaft ist, wobei in der Netzmanagement-Botschaft für ein Netzwerk (2, 3), das mindestens die Zustände Busruhe, Busaktivität und Aufwecken eines anderen Steuergerätes unterscheidet, mindestens ein Signal reserviert ist, und
die Netzmanagement-Botschaft durch ein kommunizierendes Steuergerät (12, 13) mindestens teilweise generierbar und/oder sendbar ist, wobei in Steuergeräten (12, 13) des Kommunikationssystems (1) mindestens Informationen über benötigte Kommunikationspartner und deren Zuordnung zu einem Netzwerk (2, 3) vorhanden und/oder abrufbar sind.

8. Vorrichtung nach Anspruch 7, **dadurch gekennzeichnet, dass** in einer Sollverbauliste eine Konfiguration ablegbar ist, wobei eine Zuordnung eines Steuergeräts (12, 13) zu einem Netzwerk (2, 3) der Sollverbauliste entnehmbar ist.

9. Vorrichtung nach Anspruch 7 oder 8, **dadurch gekennzeichnet, dass** die Netzmanagement-Botschaft durch ein aktives Steuergerät (12, 13) zyklisch wiederholt sendbar ist und/oder eine Schlafbereitschaft eines Steuergeräts (12, 13) durch Ausbleiben der Netzmanagement-Botschaft signalisierbar ist.

10. Vorrichtung nach Anspruch 9, **dadurch gekennzeichnet, dass** ausgefallene Steuergeräte (12, 13) als schlafbereit eingestuft sind.

11. Vorrichtung nach Anspruch 9 oder 10, **dadurch gekennzeichnet, dass** ein dem Kommunikationssystem (1) zugeordnetes Netzwerk (2, 3) in einen Busruhe-Zustand überführbar ist, wenn alle Steuergeräte (12, 13) des Netzwerks (2, 3) schlafbereit sind.

12. Vorrichtung nach Anspruch 11 umfassend Mittel zur Erkennung einer Busberuhigungsphase, wobei der Übergang in einen Busruhe-Zustand des Netzwerks (2, 3) nach Ablauf der Busberuhigungsphase erfolgt und in der Busberuhigungsphase Sendefunktionen abgeschaltet und Empfangsfunktionen aktiviert sind.

## Claims

1. Method for the inter-network management of at least one communication system comprising at least two physically separate networks with in each case at least one control device, wherein the start-up of a network and/or the maintenance of a bus activity of the network is triggered by the reception of a signal by at least one control device of the network,
**characterized in that** the signal is part of a network management message, wherein at least one signal is reserved in the network management message for a network (2, 3) which distinguishes at least between the states of bus idleness, bus activity and wake-up of another control device, and the network management message is at least partially generated and/or transmitted by a communicating control device (12, 13), wherein in control devices (12, 13) of the communication system (1), at least information on required communication partners and their allocation to a network (2, 3) exists and/or is retrieved.

2. Method according to Claim 1, **characterized in that** a configuration is deposited in a scheduled assembly list, wherein an allocation of a control device (12, 13) to a network (2, 3) can be found in the scheduled assembly list.

3. Method according to Claim 1 or 2, **characterized in that** an active control device (12, 13) transmits the network management message cyclically repeatedly and/or a ready for sleep mode of a control device (12, 13) is signalled by the network management message failing to appear.

4. Method according to Claim 3, **characterized in that** failed control devices (12, 13) are graded as ready for sleep.

5. Method according to Claim 3 or 4, **characterized in that** a network (2, 3) allocated to the bus system (1) is changed into a bus idleness state when all control devices (12, 13) of the network (2, 3) are ready for sleep.

6. Method according to Claim 5, **characterized in that** the transition into a bus idleness state of the network (2, 3) takes place after a bus calming phase, wherein transmit functions are switched off and receive functions remain activated in the bus calming phase.

7. Device for the inter-network management of at least one communication system comprising at least two physically separate networks with in each case at least one control device, wherein the start-up of a network and/or the maintenance of a bus activity of the network can be triggered by the reception of a signal by at least one control device of the network,
**characterized in that** the signal is part of a network management message, wherein at least one signal is reserved in the network management message for a network (2, 3) which distinguishes at least between the states of bus idleness, bus activity and wake-up of another control device, and the network management message can be at least partially generated and/or transmitted by a communicating control device (12, 13), wherein in control devices (12, 13) of the communication system (1), at least information on required communication partners and their allocation to a network (2, 3) exists and/or can be retrieved.

8. Device according to Claim 7, **characterized in that** a configuration can be deposited in a scheduled assembly list, wherein an allocation of a control device (12, 13) to a network (2, 3) can be found in the scheduled assembly list.

9. Device according to Claim 7 or 8, **characterized in that** the network management message can be transmitted cyclically repeatedly by an active control device (12, 13) and/or a ready for sleep mode of a control device (12, 13) can be signalled by the network management message failing to appear.

10. Device according to Claim 9, **characterized in that** failed control devices (12, 13) are graded as ready for sleep.

11. Device according to Claim 9 or 10, **characterized in that** a network (2, 3) allocated to the communication system (1) can be changed into a state of bus idleness when all control devices (12, 13) of the network (2, 3) are ready for sleep.

12. Device according to Claim 11 comprising means for detecting a bus calming phase, wherein the transition into a bus idleness state of the network (2, 3) takes place after completion of the bus calming phase and transmit functions are switched off and receive functions are activated in the bus calming phase.

## Revendications

1. Procédé de gestion se propageant sur les réseaux d'au moins un système de communication comportant au moins deux réseaux physiquement séparés avec respectivement au moins un équipement de commande, la montée en charge d'un réseau et/ou le maintien d'une activité de bus du réseau étant déclenchée par une réception d'un signal par au moins un équipement de commande du réseau,
**caractérisé en ce que**
le signal fait partie d'un message de gestion de réseau, au moins un signal étant réservé dans le message de gestion de réseau pour un réseau (2, 3) distinguant au moins les états de repos du bus, d'activité du bus, et de réveil d'un autre équipement de commande, et que
le message de gestion de réseau est généré et/ou émis au moins partiellement par un équipement de commande communiquant (12, 13), des informations sur les partenaires de communication nécessaires et leurs affectations à un réseau (2, 3) étant au moins disponibles et/ou étant appelées dans les équipements de commande (12, 13) du système de communication (1).

2. Procédé selon la revendication 1, **caractérisé en ce qu'**une configuration est déposée dans une liste de structures de consigne, une attribution d'un équipement de commande (12, 13) à un réseau (2, 3) pouvant être extraite de la liste de structures de consigne.

3. Procédé selon la revendication 1 ou 2, **caractérisé en ce qu'**un équipement de commande (12, 13) actif répète de manière cyclique l'émission du message de gestion de réseau et/ou qu'un équipement de commande (12, 13) prêt au sommeil est signalé par l'absence du message de gestion de réseau.

4. Procédé selon la revendication 3, **caractérisé en ce que** les équipement de commande (12, 13) en panne sont classés comme prêts au sommeil.

5. Procédé selon la revendication 3 ou 4, **caractérisé en ce qu'**un réseau (2, 3) attribué au système de bus (1) est placé dans un état de bus au repos lorsque tous les équipement de commande (12, 13) du réseau (2, 3) sont prêts au sommeil.

6. Procédé selon la revendication 5, **caractérisé en ce que** le passage du réseau (2, 3) dans un état de bus au repos après une phase de mise au repos du bus a lieu, les fonctions d'émission étant arrêtées et les fonctions de réception restant activées dans la phase de mise au repos du bus.

7. Dispositif de gestion se propageant sur les réseaux d'au moins un système de communication comportant au moins deux réseaux physiquement séparés avec respectivement au moins un équipement de commande, la montée en charge d'un réseau et/ou le maintien d'une activité de bus du réseau étant déclenchée par une réception d'un signal par au moins un équipement de commande du réseau,
**caractérisé en ce que**
le signal fait partie d'un message de gestion de réseau, au moins un signal étant réservé dans le message de gestion de réseau pour un réseau (2, 3) distinguant au moins les états de repos du bus, d'activité du bus, et de réveil d'un autre équipement de commande du réseau, et que
le message de gestion de réseau pouvant être généré et/ou émis au moins partiellement par un équipement de commande communiquant (12, 13), des informations sur les partenaires de communication nécessaires et leurs affectations à un réseau (2, 3) étant au moins disponibles et/ou pouvant être appelées dans les équipements de commande (12, 13) du système de communication (1).

8. Dispositif selon la revendication 7, **caractérisé en ce qu'**une configuration peut être déposée dans une liste de structures de consigne, une attribution d'un équipement de commande (12, 13) à un réseau (2, 3) pouvant être extraite de la liste de structures de consigne.

9. Dispositif selon la revendication 7 ou 8, **caractérisé en ce que** le message de gestion de réseau peut être émis de manière cyclique répétée par un équipement de commande (12, 13) actif et/ou qu'un équipement de commande (12, 13) prêt au sommeil peut être signalé par l'absence du message de gestion de réseau.

10. Dispositif selon la revendication 9, **caractérisé en ce que** les équipements de commande (12, 13) en panne sont classés comme prêts au sommeil.

11. Dispositif selon la revendication 9 ou 10, **caractérisé en ce qu'**un réseau (2, 3) attribué au système de communication (1) peut être placé dans un état de bus au repos lorsque tous les équipements de commande (12, 13) du réseau (2, 3) sont prêts au sommeil.

12. Procédé selon la revendication 11 comprenant des moyens pour reconnaître une phase de mise au repos du bus, le passage du réseau (2, 3) dans un état de bus au repos ayant lieu après le déroulement d'une phase de mise au repos du bus et les fonctions d'émission étant arrêtées et les fonctions de réception restant activées dans la phase de mise au repos du bus.
